(19) Europäisches Patentamt

European Patent Office

Office européen des brevets

(11) **EP 2 230 944 B1**

(12) **EUROPEAN PATENT SPECIFICATION**

(45) Date of publication and mention
of the grant of the patent:
**04.01.2017 Bulletin 2017/01**

(21) Application number: **08857180.7**

(22) Date of filing: **21.11.2008**

(51) Int Cl.:
*A23L 17/00* (2016.01)     *A23L 27/24* (2016.01)
*A23L 27/20* (2016.01)     *A23L 27/21* (2016.01)

(86) International application number:
**PCT/US2008/084291**

(87) International publication number:
**WO 2009/073397 (11.06.2009 Gazette 2009/24)**

(54) **MEAT PRODUCTS WITH INCREASED LEVELS OF BENEFICIAL FATTY ACIDS**

FLEISCHERZEUGNISSE MIT ERHÖHTEM ANTEIL GESUNDER FETTSÄUREN

PRODUITS CARNÉS DONT LES NIVEAUX D'ACIDES GRAS BÉNÉFIQUES ONT ÉTÉ AUGMENTÉS

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **29.11.2007 US 4758**

(43) Date of publication of application:
**29.09.2010 Bulletin 2010/39**

(60) Divisional application:
**16197686.5**

(73) Proprietor: **Monsanto Technology, LLC**
**St Louis, MO 63167 (US)**

(72) Inventors:
• **NISSING, Nick**
**St. Louis, MO 63167 (US)**
• **WILKES, Richard, S.**
**St Louis, MO 63167 (US)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**EP-A- 1 790 720          WO-A-2005/021761
WO-A-2006/031132     US-A1- 2005 112 233
US-A1- 2007 004 678**

• **RULE D C ET AL: "Comparison of muscle fatty
acid profiles and cholesterol concentrations of
bison, beef cattle, elk, and chicken." JOURNAL
OF ANIMAL SCIENCE 80 (5) 1202-1211 2002 DEP.
OF ANIMAL SCI., UNIV. OF WYOMING, LARAMIE
82071-3684, USA. TEL. 307-766-3404. FAX
307-766-2355. E-MAIL DCRULE(A)UWYO.EDU,
2002, pages 1202-1211, XP002520657 cited in the
application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

Embodiments of the invention related to the enhancement of desirable characteristics in meat products through the incorporation of beneficial fatty acids such as stearidonic acid (SDA).

**BACKGROUND OF THE INVENTION**

Embodiments of the present invention are directed to a method for improving foodstuffs through the utilization of plant-derived stearidonic acid ("SDA"). Specifically, the inventor provides techniques and methods for the utilization of plant-derived SDA in meat products that improve nutritional quality and palatability.

In the past dietary fats have been thought of as valueless or even harmful dietary components. Many studies have made a physiological link between dietary fats and obesity and other pathologies such as atherosclerosis. Given this perception of low nutritional value, consumption of fats has been discouraged by many in the medical establishment.

However, recent studies have determined that despite their relatively simple biological structures there are some types of fats that appear to improve body function in some ways and that may, in fact, be essential to certain physiological processes. The wider class of fat molecules includes fatty acids, isoprenols, steroids, other lipids and oil-soluble vitamins. Among these are the fatty acids. The fatty acids are carboxylic acids, which have from 2 to 26 carbons in their "backbone," with none, or various numbers of unsaturated sites in their carbohydrate structure. They generally have dissociation constants (pKa) of about 4.5 indicating that in normal body conditions (physiological pH of 7.4) the vast majority will be in a dissociated form.

With the improvement in nutritional stature for fats and in particular fatty acids, many in the food industry have begun to focus on fatty acids and lipid technology as a new focus for food production. This focus has been particularly intense for the production and incorporation of Omega-3 fatty acids into the diet. Omega-3 fatty acids are long-chain polyunsaturated fatty acids (18-22 carbon atoms in chain length) with the first of the double bonds ("unsaturations") beginning with the third carbon atom. They are called "polyunsaturated" because their molecules have two or more double bonds "unsaturations" in their carbohydrate chain. They are termed "long-chain" fatty acids since their carbon backbone has at least 18 carbon atoms. In addition to stearidonic acid "SDA" the omega-3 family of fatty acids includes alpha-linolenic acid ("ALA"), eicosapentaenoic acid ("EPA"), and docosahexaenoic acid ("DHA"). ALA is the "base" omega-3 fatty acid, from which EPA and DHA are made in the body through a series of enzymatic reactions, including the production of SDA. Most nutritionists point to DHA and EPA as the most physiologically important of the Omega-3 fatty acids. This synthesis processes from ALA are called "elongation" (the molecule becomes longer by incorporating new carbon atoms) and "desaturation" (new double bonds are created), respectively. In nature, ALA is primarily found in certain plant seeds (e.g., flax) while EPA and DHA mostly occur in the tissues of cold-water predatory fish (e.g., tuna, trout, sardines and salmon), and in some marine algae or microbes that they feed upon.

Along with the movement of food companies to develop essential fats and oils as an important component in a healthy diet, governments have begun developing regulations pushing for the adoption of PUFA's in the diet. The difficulty in supplying these needs has been the inability to develop a large enough supply of Omega-3 oil to align with growing marketplace demand. As already mentioned, the Omega-3 fatty acids deemed to be of highest value, EPA and DHA, also chemically degrade very quickly over time limiting commercial access. Importantly, during the rapid process of EPA and DHA oxidation these long chain fatty acids develop rancid or simply unsatisfactory sensory properties that make their inclusion in many foodstuffs difficult or impossible from a commercial acceptance perspective. In addition, with increased demand for Omega-3 fatty acids has come the realization that already depleted global fish stocks cannot meet any significant growth in future human nutritional needs for Omega-3's. These limitations on supply, stability and sourcing greatly increase cost and correspondingly limit the availability of dietary Omega-3's.

Accordingly, a need exists to provide a consumer acceptable means of delivering EPA and DHA or critical precursors in food formulations in a commercially acceptable way. The current invention provides this alternative to fish or microbe supplied Omega-3 fatty acids and does so utilizing a comparatively chemically stable Omega-3 fatty acid, SDA as a source that offers neutral taste, cost-effective production and abundant supply as derived from transgenic plants. SDA is the immediate metabolic product of α-linoleic acid ("ALA"), and once in the body is readily metabolized to EPA. The plant species that are specifically included within the group of those that could supply demand are: soybeans, corn, and canola, but also may include other plants as needed. Once produced the SDA of the invention can be used to improve the health characteristics of a great variety of food products. This production can also be scaled-up as needed to both reduce the need to harvest wild fish stocks and to provide essential fatty acid components for aquaculture operations, each easing pressure on global fisheries.

While not wishing to be bound by theory, it is believed that food compositions comprising alpha-linolenic acid are not efficiently converted to EPA when formulated into food compositions within reasonable ranges of concentration or consumption. Traditional means of obtaining physiologically relevant amounts of EPA or DHA include addition of fish oils or algal oils which possess negative attributes of off-flavors and poor stability. In order to contain a concentration of ALA that will lead to a physiologically significant concentration of EPA and DHA in the body, an excessive amount of ALA is required, leading to difficulties in formulating food products.

Surprisingly, the inventors have found that the concentration of SDA from transgenic plant sources required in a food product to be physiologically significant is well within acceptable ranges for typical food products. A further benefit is found in the enhanced flavor and stability in comparison with other means of obtaining similar benefits such as direct addition of DHA containing oils such as fish oil. SDA, unlike traditional omega 3 fatty acids, is uniquely suited for both healthy and stable food compositions.

Incorporation of omega 3 comprising oil into meat products has been described in the art, such as for example U.S. Patent 5,116,629. However, existing methods include addition of highly unstable EPA or DHA which may lead to shelf-life and flavor issues; or incorporation of traditional omega 3 sources such as ALA, which are not converted to the beneficial forms efficiently enough to be of practical value to the health of the consumer. Nutritional studies have shown that, compared to alpha-linolenic acid, SDA is about 5 times more efficiently converted *in vivo* to EPA.

Meat and meat products may have a variety of fatty acid compositions depending on the species from which the tissue is derived, the type of tissue analyzed, and the feed provided to the animal (see e.g. D.C. Rule et al., J. Animal Sci. 80(5):1202-1211 (2002)). However, meat and meat products are usually characterized by an excess of saturated fatty acids and a dearth of beneficial fatty acids such as SDA, EPA, and DPA. As such, it would be preferably to increase the relative ratio of beneficial fatty acids to saturated fatty acids in meat products.

Methods of altering feed compositions to improve fatty acid profiles of animal tissue are known in the art, such as for example WO06031132, US2007/04678A1, US2004/001876, and US6716460. However, these methods of incorporation of key fatty acids is inefficient and the maximum concentration is significantly limited by the basic physiology of the species - for example, the percentage of beneficial fatty acids is limited by the animal's natural fat content. Furthermore, the fatty acid profile of the feed is significantly altered by the normal physiological processes within the animal, which further limits the ability to customize the fatty acid profile of the resulting food product. Unfortunately, a significant portion of the desired fatty acids are not incorporated into the tissue of the livestock animal.

Many meat products today are modified with a variety of compounds to increase their flavor and improve their texture. This modification can take a variety of forms known in the art such as coating the meat (e.g., marinades), infusing the meat (i.e., "pumped" meats), or mechanical incorporation (e.g., sausage, lunch meats) or simple injection of the beneficial fatty acid. In many cases, these compounds are intended to improve attributes of the meat product that have been adversely affected by lowering the natural fat content of the meat. For example, tenderizing processing methods and/or additives are some times used to improve the texture of low-fat pork. Higher fat products generally have better taste and texture, but are generally perceived as less healthy by consumers.

Numerous methods exist in the art for altering the characteristics of meat products for human consumption. Many of these methods are based on altering the chemical content of the meat through injection of various additives including flavor improving agents, texture improving agents, tenderizing agents, or water. Further approaches to modifying the characteristics of meat through processing techniques may include mechanical manipulation (for example, tenderizing) or the addition of alternative protein sources such as vegetable protein, dairy whey protein, or other protein sources.

Examples of references describing methods of altering the characteristics of meat products include US Patents 6,955,830, 6,869,631, 6,763,760, 6,632,463, 6,405,646, 6,386,099, 6,319,527, 6,165,528, 5,071,666, 5,881,640, 5,307,737, 5,053,237, 3,556,809, 5,460,842, and 5,116,629.

In the case of sausages, cold cuts, ground meat products, reconstituted meat products, and other processed meats, additives may also be used to alter the quality of the product. These additives can be added at the point of mixing to create a finished meat product with at least some homogeneity. With products of this type, a variety of meats may be mixed including those that are of various qualities, sources, and lipid contents.

Some meat products are processed to lower the animal fat content of the meat product (see for example US Patents 6,099,891, 5,468,510, 5,382,444, 5,688,549, 5,460,842, and 5,116,629, WO05034652A1 and WO05094617A1). Some methods of improving the fat content of meat products include heating the product to remove the solid-phase animal fat. For example, US Patent 5,116,633 describes a process of heating a meat product in an unsaturated oil to extract the natural fats and increase the content of unsaturated fat and cholesterol. Another example, US Patent 5,460,842, describes a process for altering the fat content of meat by extracting fat using a cooled needle, and injecting "marbleizing fat" content alteration of raw meat useful for removing fat - by piercing raw meat with needle, subsequently withdrawing and removing adhered fat, useful for exchanging saturated fat for unsaturated.

Further, the production of transgenic soybean oil seed with enhanced level of stearidonic acid and its utilization for foods and food supplement is known from WO2005021761.

Modification of animal flesh in processing may include muscle tissue from bovine, swine, chicken, fish, or other sources. One particular example can be found in the pork industry. For many years, the pork industry has emphasized reducing the fat content in the finished product through methods of phenotypic breeding. More recently, marker assisted selection and other methods of advanced breeding have been used to create animals with altered meat quality characteristics. The long term effect of lowering the fat content of pig tissue through breeding is considered to be a healthier, lower fat meat product for the consumer. However, the lower fat products generally come at the expense negative impacts to of flavor and texture. It would be desirable to have both the health benefits of lower saturated fats, and the improved flavor and texture associated with higher fat content in the same product.

Methods of marker assisted selection and markers associated with meat quality are known in the art. Examples include the following: US6803190, US20040261138, US20060288433, US20040018511, US6569629, US6803190, US6919177, US6458531, US6492142, US6919177, US7074562, and US20030186299. Genetic markers can be used to more effectively select animals for breeding or slaughter based on desired phenotypes. In particular, marker assisted selection is more effective than traditional breeding methods when selecting for traits which are difficult to measure on a live animal such as intramuscular fat, meat quality, meat tenderness, and meat color.

## SUMMARY OF THE INVENTION

Embodiments of the present invention encompass meat products with increased levels of beneficial fatty acids including stearidonic acid ($18{:}4\omega3$). The palatability of the meat product and/or the health of an end consumer is improved through incorporation of these beneficial fatty acids. In particular, oil comprising stearidonic acid from transgenic soybeans is incorporated into the meat product.

Sufficient quantities of SDA enriched soybeans have been grown to allow the delivery of soybean oil with a substantial SDA component. This "SDA oil" provides an initial clean flavor, longer shelf-life stability and enhanced nutritional quality relative to traditional omega-3 alternatives. The invention provides for a meat product with improved characteristics and improved compositions of physiologically significant polyunsaturated fatty acids.

Accordingly, the present invention provides a meat product comprising endogenous oil from a transgenic soybean, wherein the meat product comprises arachidonic acid (AA), alpha-linolenic acid (ALA), and stearidonic acid (SDA), wherein the ratio of concentrations of SDA/AA is at least 0.1, the ratio of concentrations of SDA/ALA is at least 1.0, and said food product comprises at least 0.1 grams of SDA per 100 grams of meat product. Methods are disclosed for incorporating the SDA oil into the meat product. These methods of incorporation may include injection, physical mixing, surface contact, or any other methods known in the art.

Furthermore, methods of making meat products comprising SDA oil and being relatively low in saturated fat are disclosed. These methods of making a meat product incorporate breeding techniques to alter the composition of the meat product, such as for example, using marker assisted selection to decrease the inter-muscular fat of the pig. These methods further comprise adding SDA oil to the meat product to increase the beneficial lipid content, thereby improving the taste and palatability of the product while improving the health profile of the resulting meat product.

Methods for making a meat product may also comprise lowering the saturated fat content after tissue has been harvested from the livestock animal through mechanical or chemical means, along with the additions of SDA oil to increase the beneficial fatty acid content of the meat.

Methods for making a meat product may also comprise processing the meat product at reduced temperatures and/or addition of SDA after high temperature processing steps.

In some alternative embodiments of the invention, meat products may have substantial secondary components, and are for example, a pizza, a pre-packaged meal, soup, ready-to-eat meals, or other food product.

Other features and advantages of this invention will become apparent in the following detailed description of preferred embodiments of this invention, taken with reference to the accompanying figures.

## DEFINITIONS

The following definitions are provided to aid those skilled in the art to more readily understand and appreciate the full scope of the present invention. Nevertheless, as indicated in the definitions provided below, the definitions provided are not intended to be exclusive, unless so indicated. Rather, they are preferred definitions, provided to focus the skilled artisan on various illustrative embodiments of the invention.

As used herein the term "meat color" refers to measurements of color of meat obtained from a slaughtered animal.

As used herein the term "meat quality" refers to measurements of the palatability and/or eating qualities (e.g. marbling, texture, and tenderness) of meat from a slaughtered animal. For example, quantifying meat quality can be accomplished by measuring phenotypes including, but not limited to: Drip loss (%); purge loss (%); pH of loin or ham; moisture content in the loin (%); NPPC firmness quality score (1-5); Werner-Bratzler shear force (kg); intramuscular fat content (%), and cooking loss (%).

As used herein the term "meat composition" refers to any number of phenotypes including, but not limited to: average backfat thickness (e.g. in inches or centimeters) measured on the carcass or on the live animal using ultrasound; loin muscle (eye) area (e.g. in$^2$) measured on the carcass or on the live animal using ultrasound; fat depth, loin depth (millimeters) and carcass weight (pounds) measured on-line after slaughter using industry standard equipment (e.g., Fat-O-Meater); predicted lean percentage (%) calculated from backfat thickness, loin muscle depth or area, and body or carcass weight; carcass length (e.g. in inches); National Pork Producers Council (NPPC) marbling quality score (i.e., 1-5); Intramuscular fat content of the loin (%); primal cuts (loin, shoulder, belly, etc) as a percent of carcass weight (%); carcass yield as a percentage of live weight (%).

As used herein the term "meat product" refers to food products comprising the flesh of livestock animals such as bovine, swine, and poultry.

As used herein the term "genetic marker" refers to a DNA sequence that can be identified due to unique features such as a single nucleotide polymorphism (SNP), microsatellite, RFLP markers, or any other identifiable genetic marker.

As used herein, the term "mixed meat product" refers to products which incorporate multiple muscles into the same meat product through the process of mechanical mixing. Such products include, for example, sausages, hot dogs, hamburger, processed meats, bologna, salami, reconstituted meat products, and the like. Mixed meat products may include meat only from one species of animal or from more than one species of animal. Mixed meat products may also include protein from non-meat sources such as, for example, soy protein.

As used herein, the term "reconstituted meat product" includes meat products comprising a plurality of meat pieces agglomerated together. Reconstituted meat products may include additional components such as binders, fillers, flavorants, and preservatives, including additional sources of protein such as other meat from other sources, including plants or plant products for example - soy protein.

As used herein, the term "food product" refers to edible products for human consumption.

## DETAILED DESCRIPTION OF THE INVENTION

Embodiments of the invention include edible meat products for human consumption comprising stearidonic acid (SDA), and gamma linolenic acid (GLA), wherein: the SDA concentration is at least 0.01% of the total fat content of the meat product; the GLA concentration is at least 0.01% of the total fat content of the meat product; and wherein the ratio of SDA/GLA concentrations is at least 2. Preferred embodiments may have an SDA concentration which is at least 0.1%, at least 0.5%, or at least 1.0% of the total fatty acid content of the meat product. Alternative embodiments may have a ratio of SDA/GLA concentrations which are at least 2.0.

Embodiments of the invention may also comprise tocopherol, preferably at least 50ppm, and more preferably at least 100ppm tocopherol. Preferably, embodiments have an omega-3 to omega-6 fatty acid ratio of the meat product which is greater than about 1:1. Alternative embodiments of the invention may further comprise 6-cis, 9-cis, 12-cis, 15-trans-octadecatetraenoic acid. Alternative embodiments of the invention may further comprise 9-cis, 12-cis, 15-trans-alpha linolenic acid. Alternative embodiments of the invention may further comprise 6, 9 -octadecadienoic acid. Embodiments of the invention may also comprise soy protein.

Embodiments of the invention include meat products in a variety of forms including a pumped meat product, a mechanically mixed meat product, a reconstituted meat product, and a coated meat product.

Embodiments of the invention may further comprise any additives known in the art as flavorings, tenderizing agents, stabilizers, emulsifiers, antioxidants, and/or processing aids for use with meat products. Additives may include, but are not limited to, sodium chloride, potassium chloride, tocopherol, sugar, sodium tripolyphosphate, ascorbate, sodium nitrite, sodium nitrate, potassium lactate, sodium diacetate, acetic acid, sodium ascorbate, smoke flavoring agents, lecithin, water, methyl cellulose, bouillon, vinegar, colorants, vitamins, preservatives, pickling agents, spices, binders, soy protein, and/or emulsifying agents.

Furthermore, embodiments of the invention include food products made with meat products as described herein. Such food products may include any edible composition comprising a meat product, including such foods as pizza, soups, ready to eat meals and prepared dishes.

Disclosed are methods of producing a meat product comprising: testing an animal to obtain genetic information; selecting said animal for breeding according to said genetic information; breeding said animal to produce progeny; harvesting meat tissue from at least one of said progeny; contacting said meat tissue with a vegetable oil; and wherein said vegetable oil comprises at least 0.01% stearidonic acid. In preferable embodiments, the animal is selected based on predicted meat quality, intra-muscular fat, or pH, meat color, or meat composition. In especially preferred embodiments, the animal is selected based on predicted intra-muscular fat content. In especially preferred embodiments, said selection results in meat with a reduced fat content. In some embodiments, genetic markers such as SNPs are used in making said prediction. In preferred embodiments, marker-assisted selection is used to select said animals for breeding.

Also disclosed are methods of producing a food product for human consumption comprising: providing a source of stearidonic acid; providing an aqueous liquid; providing at least one meat ingredient; contacting said stearidonic acid source with said aqueous liquid and said meat ingredient to make a supplemented meat product; and wherein said stearidonic acid source comprises a transgenic plant oil.

Also disclosed are methods of making a food product for human consumption comprising: providing a source of stearidonic acid (SDA); providing animal meat tissue; heating said animal meat tissue; and combining said source of SDA with said animal tissue. Preferred embodiments include methods of making a food product wherein said meat tissue is heated prior to combining with said source of SDA. Alternative embodiments include heating said meat products to remove a portion of the animal fat prior to combining with said source of SDA. Preferable embodiments include minimizing the temperature used to process said meat after combining with said SDA source.

Embodiments of the present invention also include food products comprising arachidonic acid (AA) and stearidonic acid (SDA) wherein the ratio of concentrations of SDA/AA is at least 0.1, and wherein said food product comprises at least 0.1 grams of SDA per 100 grams of food product. Preferable embodiments of the invention comprise ratio of concentrations of SDA/AA is at least 0.2, at least 0.3, at least 0.5, at least 1.0, and at least 2.0. Embodiments of the present invention may further comprise gamma-linolenic acid (GLA). Preferably, embodiments of the present invention may comprise a ratio of SDA/GLA of at least 2.0.

Also disclosed are methods of producing meat products comprising: providing animal tissue; reducing the saturated fatty acid content of said animal tissue; contacting vegetable oil with said animal tissue; wherein the unsaturated fatty acid content of said meat product is increased and wherein said meat product comprises at least about 0.1% SDA. Embodiments may further comprise heating said animal tissue while producing said meat products. In preferable embodiments, the vegetable oil comprises an endogenous soybean oil. In further preferably embodiments of the invention, the vegetable oil further comprises gamma-linolenic acid (GLA). In preferred embodiments of the invention, the vegetable oil has a ratio of SDA/GLA of at least 2.0. Alternative embodiments may further comprise arachidonic acid (AA). Preferable embodiments may have an SDA/AA concentration ratio of at least 0.1, at least 0.2, at least 0.3, at least 0.4, at least 0.5, at least 1.0, and at least 2.0. Such methods may comprise physically mixing the vegetable oil and the meat tissue, injecting said vegetable oil into said meat tissue, or contacting exterior surfaces of said meat tissue with vegetable oil.

## Production of SDA:

Disclosed is a system for an improved method for the plant based production of stearidonic acid and its incorporation into the diets of humans and livestock in an effort to improve human health. This production is made possible through the utilization of transgenic plants engineered to produce SDA in sufficiently high yield to so as to allow commercial incorporation into food products. For the purposes of the current invention the acid and salt forms of fatty acids, for instance, butyric acid and butyrate, arachidonic acid and arachidonate, will be considered interchangeable chemical forms.

All higher plants have the ability to synthesize the main 18 carbon PUFA's, LA and ALA, and in some cases SDA (C18:4n3, SDA), but few are able to further elongate and desaturate these to produce arachidonic acid (AA), EPA or DHA. Synthesis of EPA and/or DHA in higher plants therefore requires the introduction of several genes encoding all of the biosynthetic enzymes required to convert LA into AA, or ALA into EPA and DHA. Taking into account the importance of PUFAs in human health, the successful production of PUFAs (especially the n-3 class) in transgenic oilseeds, can then provide a sustainable source of these essential fatty acids for dietary use. The "conventional" aerobic pathway which operates in most PUFA-synthesizing eukaryotic organisms, starts with $\Delta 6$ desaturation of both LA and ALA to yield $\gamma$-linolenic (GLA, 18:3n6) and SDA.

Turning to Table 1, it is important to provide a basis of what constitutes 'normal' ranges of oil composition vis-a-vis the oil compositions of the current invention. Table 1 gives examples of fatty acid content of various oils commonly used in food products, expressed as a percentage of total oil.

**TABLE 1 -** STANDARDS FOR FATTY ACID COMPOSITION OF OILS (% OF OIL)

| Fatty acid | Rapese ed oil (low erucic acid) | Sesame seed oil | Soybean oil | Sunflower seed oil | Arachis oil (peanut oil) | Coconut oil | Maize oil | Palm oil |
|---|---|---|---|---|---|---|---|---|
| C6:0 | ND | ND | ND | ND | ND | ND-0.7 | ND | ND |
| C8:0 | ND | ND | ND | ND | ND | 4.6-10.0 | ND | ND |
| C10:0 | ND | ND | ND | ND | ND | 5.0-8.0 | ND | ND |
| C12:0 | ND | ND | ND-0.1 | ND-0.1 | ND-0.1 | 45.1 53.2 | ND-0.3 | ND-0.5 |
| C14:0 | ND-0.2 | ND-0.1 | ND-0.2 | ND-0.2 | ND-0.1 | 16.8-21.0 | ND-0.3 | 0.5-2.0 |
| C16:0 | 2.5-7.0 | 7.9-12.0 | 8.0-13.5 | 5.0-7.6 | 8.0-14.0 | 7.5-10.2 | 8.6-16.5 | 39.3-47.5 |
| C16:1 | ND-0.6 | ND- 0.2 | ND-0.2 | ND-0.3 | ND-0.2 | ND | ND-0.5 | ND-0.6 |
| C17:0 | ND-0.3 | ND-0.2 | ND-0.1 | ND-0.2 | ND-0.1 | ND | ND-0.1 | ND-0.2 |
| C17:1 | ND-0.3 | ND-0.1 | ND-0.1 | ND-0.1 | ND-0.1 | ND | ND-0.1 | ND |
| C18:0 | 0.8-3.0 | 4.5-6.7 | 2.0-5.4 | 2.7-6.5 | 1.0-4.5 | 2.0-4.0 | ND-3.3 | 3.5-6.0 |
| C18:1 | 51.0-70.0 | 34.4-45.5 | 17-30 | 14.0-39.4 | 35.0-69 | 5.0-10.0 | 20.0-42.2 | 36.0-44.0 |
| C18:2 | 15.0-30.0 | 36.9-47.9 | 48.0-59.0 | 48.3-74.0 | 12.0-43.0 | 1.0-2.5 | 34.0-65.6 | 9.0-12.0 |
| C18:3 | 5.0-14.0 | 0.2-1.0 | 4.5-11.0 | ND-0.3 | ND-0.3 | ND-0.2 | ND-2.0 | ND-0.5 |
| C20:0 | 0.2-1.2 | 0.3-0.7 | 0.1-0.6 | 0.1-0.5 | 1.0-2.0 | ND-0.2 | 0.3-1.0 | ND-1.0 |
| C20:1 | 0.1-4.3 | ND-0.3 | ND-0.5 | ND-0.3 | 0.7-1.7 | ND-0.2 | 0.2-0.6 | ND-0.4 |
| C20:2 | ND-0.1 | ND | ND-0.1 | ND | ND | ND | ND-0.1 | ND |
| C22:0 | ND-0.6 | **NN-1.1** | ND-0.7 | 0.3-1.5 | 1.5-4.5 | ND | ND-0.5 | ND-0.2 |
| C22:1 | ND-2.0 | ND | ND-0.3 | ND-0.3 | ND-0.3 | ND | ND-0.3 | ND |
| C22:2 | ND-0.1 | ND | ND | ND-0.3 | ND | ND | ND | ND |
| C24: 0 | ND-0.3 | ND-0.3 | ND-0.5 | ND-0.5 | 0.5-2.5 | ND | ND-0.5 | ND |
| C24:1 | ND-0.4 | ND | ND | ND | ND-0.3 | ND | ND | ND |

*Source:* CODEX STANDARD FOR NAMED VEGETABLE OILS, CODEX-STAN 210 (Amended 2003,2005).

More recently, oils from transgenic plants have been created. Some embodiments of the present invention may incorporate products of transgenic plants such as transgenic soybean oil. Transgenic plants and methods for creating such transgenic plants can be found in the literature (see for example, WO2005/021761). As shown in Table 2, the composition of the transgenic soy oil is substantially different than that of the accepted standards for soy oil.

**TABLE 2. Examples of Transgenic SDA soy oil fatty acid compositions (% of Oil)**

|  | High SDA Soy Oil | Medium SDA Soy Oil | Low SDA Soy Oil |
|---|---|---|---|
| C14:0 (Myristic) | 0.1 | 0.1 | 0.1 |
| C16:0 (Palmitic)) | 12.5 | 12.3 | 12.1 |
| C16:1 (Palmitoleic) | 0.1 | 0.1 | 0.1 |
| C18:0 (Stearic) | 4.2 | 4.6 | 4.2 |
| C18:1 (Oleic) | 16.0 | 18.7 | 19.4 |
| C18:2 (Linoleic) | 18.5 | 23.9 | 35.3 |
| C18:3 n6 (Gamma Linolenic) | 7.2 | 6.4 | 4.9 |
| C18:3 n3 (Alpha-Linolenic) | 10.3 | 10.8 | 10.1 |
| C18:4 n3 (Stearidonic) | 28.0 | 20.5 | 11.4 |
| C20:0 (Arachidic) | 0.4 | 0.4 | 0.4 |
| C20:1 (Eicosenoic) | 0.3 | 0.2 | 0.4 |
| C22:0 (Behenic) | 0.3 | 0.3 | 0.4 |
| C24:0 (Lignoceric) | 0.1 | 0.1 | 0.1 |
| 6-cis, 9-cis, 12-cis, 15-trans-octadecatetraenoic acid | <0.2% | <0.2% | <0.2% |
| 9-cis, 12-cis, 15-trans-alpha linolenic acid | <0.2% | <0.2% | <0.2% |
| 6, 9 -octadecadienoic acid | <0.2% | <0.2% | <0.2% |
| Total trans-fatty acid | 1.5 | 1.2 | 0.9 |
| Other fatty acids | 0.6 | 0.6 | 0.3 |

The SDA rich soybeans produced in a recombinant oilseed plant provides a composition not previously available for food product manufacturers. In addition the use of these compositions is made possible without the traditional concerns with stability when oils comprising DHA are delivered from a fish or algal source.

The preferred source of stearidonic acid in some embodiments is transgenic soybeans which have been engineered to produce high levels of stearidonic acid. The soybeans may be processed at an oil processing facility and oil may be extracted consistent with the methods described in US 2006/0111578, 2006/0110521, and 2006/0111254.

Fatty acid compositions of various meat products are known in the art. See for example Droulez et al (2006), Rule et al (2002), and the USDA Composition of Foods - Raw, Processed, Prepared; USDA Human Nutrition Information Service Agriculture Handbook. Fatty acid compositions for numerous meat products are also available on the internet. See for example, the USDA Agricultural Research Service Nutrient Data Laboratory at www.nal.usda.gov/fnic/foodcomp/search/. For exemplary purposes, Table 3 contains fatty acid profiles excerpted from Rule et al (Comparison of muscle fatty acid profiles and cholesterol concentrations of bison, beef cattle, elk and chicken, J Anim Sci. 80:1202-1211, 2002), with the ratios of SDA/14:0, SDA/15:0, SDA/18:0, and SDA/20:4 added.

**TABLE 3.** Weight percentage of fatty acids and concentrations of cholesterol and total fatty acids in *longissmus dorsi* muscle of bison, beef cattle, and elk and in chicken breast

| Fatty Acid b | Bison | | Beef | | Elk | Chicken breast |
|---|---|---|---|---|---|---|
|  | Range | Feedlot | Range | Feedlot |  |  |
| 14:00 | 1.58 | 1.47 | 2.03 | 2.66 | 3.84 | 0.48 |
| 14:1cis-9 | 0 | 0.18 | 0.6 | 0.39 | 0 | 0 |
| i15:0 | 0.27 | 0.01 | 0.19 | 0.04 | 0.03 | 0.09 |

(continued)

| Fatty Acid b | Bison | | Beef | | Elk | Chicken breast |
|---|---|---|---|---|---|---|
| | Range | Feedlot | Range | Feedlot | | |
| a15:0 | 0 | 0 | 0.12 | 0.03 | 0.31 | 0 |
| 15:00 | 3.61 | 2.25 | 1.54 | 0.42 | 4.05 | 2.48 |
| i16:0 | 0.02 | 0.14 | 0.16 | 0.1 | 0.18 | 0 |
| 16:00 | 17.2 | 18 | 22.2 | 25.8 | 23.8 | 21.8 |
| 16:1cis-9 | 2.58 | 3.08 | 2.67 | 3.75 | 10.9 | 5.3 |
| i17:0 | 0.7 | 0.3 | 0.56 | 0.26 | 0.23 | 0.21 |
| 17:00 | 1.31 | 2.19 | 1.32 | 1.2 | 0.5 | 0.04 |
| 17:1cis-9 | 1.22 | 2.26 | 1.26 | 1.05 | 0.42 | 0.74 |
| 18:00 | 16.8 | 12.6 | 13.4 | 13.5 | 8.75 | 8.83 |
| 18:1trans | 0.16 | 0.01 | 0.14 | 0.01 | 0.29 | 0.36 |
| 18:1cis-9 | 30.7 | 43.3 | 37.5 | 40.4 | 12.9 | 28.1 |
| 18:1cis-11 | 0.47 | 0 | 0.37 | 0 | 5.72 | 2.55 |
| 18:2cis-9,12 | 7.81 | 6.75 | 4.1 | 3.11 | 10.1 | 17 |
| 18:2cis-9, trans-11 | 0.34 | 0.28 | 0.41 | 0.26 | 0.1 | 0.07 |
| 18:2trans-10, cis-12 | 0.02 | 0.01 | 0.12 | 0.01 | 0.03 | 0 |
| 18:2cis-10,12 | 0.07 | 0.04 | 0.1 | 0.04 | 0.06 | 0.09 |
| 18:3cis-6,9,12 | 0 | 0 | 0.18 | 0 | 0.02 | 0 |
| 18:3cis-9,12,15 | 2.81 | 0.41 | 1.48 | 0.22 | 2.13 | 0.45 |
| 18:4cis-6,9,12,15 | 0.18 | 0.08 | 0.1 | 0.05 | 0.1 | 0.16 |
| 20:1cis-11 | 0 | 0 | 0.14 | 0 | 0 | 0 |
| 20:2cis-11,14 | 0.14 | 0.06 | 0.07 | 0.05 | 0.07 | 0.36 |
| 20:3cis-8,11,14 | 0.07 | 0.05 | 0.09 | 0.02 | 0.11 | 0.16 |
| 20:4cis-5,8,11,14 | 2.46 | 1.86 | 1.47 | 0.79 | 3.82 | 4.69 |
| 20:5cis-5,8,11,14,17 | 1.07 | 0.4 | 0.62 | 0.13 | 1.44 | 0.18 |
| 22:00 | 0.24 | 0.1 | 0.19 | 0.08 | 0.2 | 0.56 |
| 22:1cis-13 | 0.34 | 0.22 | 0.39 | 0.24 | 0.57 | 1.19 |
| 22:2cis-13,16 | 0.1 | 0 | 0.2 | 0.02 | 0.1 | 0 |
| 22:4cis-7,10,13,16 | 0.12 | 0.11 | 0.07 | 0.1 | 0.09 | 1.05 |
| 22:5cis-7,10,13,16,19 | 1.25 | 0.53 | 0.71 | 0.26 | 1.31 | 0.31 |
| 22:6cis-4,7,10,13,16,19 | 0.23 | 0.18 | 0.09 | 0.04 | 0.11 | 0.26 |
| 24:00:00 | 0.04 | 0.01 | 0.01 | 0.01 | 0.01 | 0.15 |
| Unknown-<C16 | 1.94 | 0.53 | 0.74 | 0.33 | 3.75 | 0.05 |
| Unknown-C16-18 | 2.26 | 1.16 | 3.17 | 0.41 | 2.39 | 1 |
| Unknown->C18 | 1.97 | 1.44 | 1.52 | 4.25 | 1.7 | 1.24 |
| SFA | 41.7 | 37 | 41.7 | 44 | 41.9 | 34.7 |
| PUFA | 16.5 | 10.7 | 9.53 | 5.04 | 19.4 | 24.6 |
| P/S | 0.4 | 0.29 | 0.23 | 0.12 | 0.49 | 0.71 |

(continued)

| Fatty Acid b | Bison | | Beef | | Elk | Chicken breast |
|---|---|---|---|---|---|---|
| | Range | Feedlot | Range | Feedlot | | |
| n-3 | 5.35 | 1.51 | 2.9 | 0.64 | 5 | 1.19 |
| n-4 | 10.3 | 8.66 | 5.66 | 3.92 | 14 | 21.9 |
| n-6/n-3 | 1.94 | 5.73 | 1.95 | 6.38 | 2.84 | 18.5 |
| Total Fatty Acids, mg/100g | 11.1 | 20.7 | 10.7 | 28.8 | 8.05 | 7.94 |
| Cholesterol mg/100g | 43.8 | 54.1 | 52.3 | 52.7 | 50.2 | 59.3 |
| | | | | | | |
| SDA/14:00 | 0.11 | 0.05 | 0.05 | 0.02 | 0.03 | 0.33 |
| SDA/15:00 | 0.05 | 0.04 | 0.06 | 0.12 | 0.02 | 0.06 |
| SDA/18:00 | 0.01 | 0.01 | 0.01 | 0.00 | 0.01 | 0.02 |
| SDA/20:4 | 0.07 | 0.04 | 0.07 | 0.06 | 0.03 | 0.03 |

In some embodiments of the present invention include meat and meat products comprising both animal tissue and steardidonic acid. In particular, addition of stearidonic acid can improve the amount of beneficial fatty acids in proportion to less desirable fatty acids such as omega-6 fatty acids like arachidonic acid (AA). In some embodiments of the present invention, the ratio of concentrations of SDA to arachidonic acid (20:4n-6) is at least 0.1, at least 0.2, at least 0.3, at least 0.5, at least 1.0, and at least 2.0.

**Methods of Breeding:**

Traditional methods of breeding using phenotypic information have been used for centuries. More recently, advances in breeding have enabled the application of genetic tools to enhance the efficiency and effectiveness of breeding. In particular, desirable traits can be associated with specific genetic content and thereby predict future performance much more effectively than using only phenotypic and/or historic information.

Genomic technology offers the potential for greater improvement in traits of livestock production and meat quality through the discovery of genes, or genetic markers linked to genes, that account for genetic variation and can be used for more direct and accurate selection. Numerous markers with associations with meat production and quality traits have been reported (see Rothschild and Plastow, 1999; see in particular pp 1-8).

For example, pigs harvested for pork around the world are typically produced by crossing closed breeding populations with distinct characteristics for maternal productivity, growth efficiency and meat quality. These closed populations typically have low levels of inbreeding and genome scans yielding markers that can be used across the population for selection. These resulting linked markers can be used in several methods of marker or marker-assisted selection, including whole-genome selection (Meuwissen et al., 2001) to improve the genetic merit of the population for these traits and the value created in the pork production chain.

Some embodiments of the invention provide methods for evaluating an animal's genotype at one or more positions in the animal's genome for MAS prior to further processing. In various aspects of these embodiments the animal's genotype is evaluated at a position within a segment of DNA (an allele) that contains at least one genetic marker such as, for example a single-nucleotide polymorphism (SNP) or a microsatellite marker.

In some embodiments of the invention, the genomic sequence at the marker locus may be determined by any means compatible with embodiments of the present invention. Suitable means are well known to those skilled in the art and include, but are not limited to direct sequencing, sequencing by synthesis, primer extension, Matrix Assisted Laser Desorption /Ionization-Time Of Flight (MALDI-TOF) mass spectrometry, polymerase chain reaction-restriction fragment length polymorphism, microarray/multiplex array systems (e.g. those available from Affymetrix, Santa Clara, California), and allele-specific hybridization.

Phenotypic traits that may be associated with the SNPs include, but are not limited to: growth traits, body and/or carcass composition, meat quality, intra-muscular fat, pH, and meat color. Preferably, MAS is used to alter these phenotypic traits to more effectively address productivity and product quality needs for products comprising added beneficial fatty acids such as stearidonic acid.

According to preferred aspects of this embodiment of the invention animals identified as having SNP alleles associated with desirable phenotypes are allocated for use consistent with that phenotype (e.g. allocated for breeding based on phenotypes positively associated with improved growth). Alternatively, animals that do not have SNP genotypes that are positively correlated with the desired phenotype (or possess SNP alleles that are negatively correlated with that phenotype) are not allocated for the same use as those with a positive correlation for the trait.

Furthermore, determination of whether and how an animal will be used as a potential parent animal may be based on its genotype at one or more, 10 or more, 25 or more, 50 or more, or 100 or more genetic markers. Other aspects of these embodiments provide methods where analysis of one or more SNPs is combined with any other desired genomic or phenotypic analysis (e.g. analysis of any genetic markers beyond those disclosed in the instant invention). Moreover, the SNP(s) analyzed may all be selected from those associated only with growth, or only with composition, or only meat color, or only meat quality. Conversely, the analysis may be done for SNPs selected from any desired combination of these or other traits.

For the purposes some embodiments of the present invention, it may be particularly desirable to select animals based on the composition of the meat, such as for example intramuscular fat (IMF) content or total fat content. In a preferred embodiment, animals are selected for breeding based on markers which are associated with relatively lower IMF content. The meat from these animals are further modified after slaughter by incorporation of oils comprising beneficial fatty acids such as stearidonic acid, thereby raising the total lipid content of the finished product while maintaining dual health benefits of low-saturated fats and high SDA content in a meat product.

Quantifying meat IMF % is generally known in the art. Differences exist in measurement methods, particularly across livestock species. However, one of skill in the art can readily ascertain methods for quantifying the relevant phenotypic parameters. For example, in pigs measuring IMG can be accomplished by measuring phenotypes including, but not limited to: **National Pork Producers Council** (NPPC) marbling standard guidelines (1.0-10.0) at the 10th/11th rib intersection of the *longissimus dorsi* (loin); or Total Lipid Percent can be determined through chemical fat extraction of a emulsified loin sample collected near the 10th/11th rib intersection of the *longissimus dorsi* (Folch, J., M. Lees, and G. H. Sloan-Stanley. 1957, A simple method for the isolation and purification of total lipids from animal tissues. J. BIOL. CHEM. 226:497-509.) or through the use of microwave/NMR technology (CEM Corporation, Matthews, NC, USA).

To improve the average genetic merit of a population for a chosen trait, one or more of the markers with significant association to that trait can be used in selection of breeding animals. In the case of each discovered locus, use of animals possessing a marker allele (or a haplotype of multiple marker alleles) in population-wide LD with a favorable QTL allele will increase the breeding value of animals used in breeding, increase the frequency of that QTL allele in the population over time and thereby increase the average genetic merit of the population for that trait. This increased genetic merit can be disseminated to commercial populations for full realization of value.

For example, a closed genetic nucleus (GN) population of pigs may be maintained to produce boars for use in commercial production of market hogs. A GN herd of 200 sows would be expected to produce approximately 4,000 offspring per year (2,000 boar offspring per year), typically according to a weekly breeding and farrowing schedule. A commercial sow herd of 300,000 would be expected to produce more than 6,000,000 market pigs per year and might maintain a boar stud with inventory of 1,500 boars to service the 300,000 sows. Hence the GN herd of 200 sows could support boar replacements for the 300,000 sows of commercial production by shipping 500 boars every six months to the commercial boar stud (assumes inventory in the commercial boar stud is turned over every 1.5 years and the top half of boar candidates from the GN are selected for commercial breeding).

The first step in using a SNP for estimation of breeding value and selection in the GN is collection of DNA from all offspring that will be candidates for selection as breeders in the GN or as breeders in other commercial populations (in the present example, the 4,000 offspring. produced in the GN each year). One method is to capture shortly after farrowing a small bit of tail tissue from each piglet into a labeled (bar-coded) tube. The DNA extracted from this tissue can be used to assay an essentially unlimited number of SNP markers and the results can be included in selection decisions before the animal reaches breeding age.

One method for incorporating into selection decisions the markers (or marker haplotypes) determined to be in population-wide LD with valuable QTL alleles (see Example 1) is based on classical quantitative genetics and selection index theory (Falconer and Mackay, 1996; Dekkers and Chakraborty, 2001). To estimate the effect of the marker in the population targeted for selection, a random sample of animals with phenotypic measurements for the trait of interest can be analyzed with a mixed animal model with the marker fitted as a fixed effect or as a covariate (regression of phenotype on number of allele copies). Results from either method of fitting marker effects can be used to derive the allele substitution effects, and in turn the breeding value of the marker:

$$\alpha_1 = q[a + d(q - p)] \qquad\qquad \text{[Equation 1]}$$

$$\alpha_2 = -p[a + d(q - p)] \qquad \text{[Equation 2]}$$

$$\alpha = a + d(q - p) \qquad \text{[Equation 3]}$$

$$g_{A1A1} = 2(\alpha_1) \qquad \text{[Equation 4]}$$

$$g_{A1A2} = (\alpha_1) + (\alpha_2) \qquad \text{[Equation 5]}$$

$$g_{A2A2} = 2(\alpha_2) \qquad \text{[Equation 6]}$$

where $\alpha_1$ and $\alpha_2$ are the average effects of alleles 1 and 2, respectively; $\alpha$ is the average effect of allele substitution; p and q are the frequencies in the population of alleles 1 and 2, respectively; a and d are additive and dominance effects, respectively; $g_{A1A1}$, $g_{A1A2}$ and $g_{A2A2}$ are the (marker) breeding values for animals with marker genotypes A1A1, A1A2 and A2A2, respectively. The total trait breeding value for an animal is the sum of breeding values for each marker (or haplotype) considered and the residual polygenic breeding value:

$$EBV_{ij} = \Sigma \, \hat{g}_j + \hat{U}_i \qquad \text{[Equation 7]}$$

where $EBV_{ij}$ is the Estimated Trait Breeding Value for the $i^{th}$ animal, $\Sigma \, \hat{g}_j$ is the marker breeding value summed from j = 1 to n where n is the total number of markers (haplotypes) under consideration, and $\hat{U}_i$ is the polygenic breeding value for the $i^{th}$ animal after fitting the marker genotype(s).

These methods can readily be extended to estimate breeding values for selection candidates for multiple traits, the breeding value for each trait including information from multiple markers (haplotypes), all within the context of selection index theory and specific breeding objectives that set the relative importance of each trait. Other methods also exist for optimizing marker information in estimation of breeding values for multiple traits, including random models that account for recombination between markers and QTL (e.g., Fernando and Grossman, 1989), and the potential inclusion of all discovered marker information in whole-genome selection (Meuwissen et al., 2001). Through any of these methods, the markers reported herein that have been determined to be in population-wide LD with valuable QTL alleles may be used to provide greater accuracy of selection, greater rate of genetic improvement, and greater value accumulation in the pork production chain.

In a preferred embodiment of the invention, meat products are made using meat from animals that have been selected using MAS. Preferably, these animals are selected to modify the meat composition or quality. For example, MAS is used to lower the intra-muscular fat in swine prior to incorporation of SDA oil into the meat product.

Specific examples of markers and associated methods which can be used for breeding related to meat quality, productivity, and/or meat composition traits for livestock animals such as swine, bovine, fish, crustaceans, and poultry include the following: US5944652, US6458531, US6696253, US6716972, US6803190, US6919177, US7244564, US2002051989, US2003017470, US2003129610, US2003186299, US2004018511, US2004029145, US2004048267, US2004055029, US2004235030, US2004259127, US2004261138, US2005202484, US2005208551, US2005214814, US2006037090, US2006211006, US2006223058, US2006275793, US2006288433, US2007003956, US2007006333, US2007092909, WO0006777, WO0034476, WO0036143, WO0146406, WO0175161, WO0220850, WO03060151, WO03071865, WO03076573, WO03078651, WO03104492, WO04063386, WO04081194, WO05001032, WO05001032, WO05015989, WO05017204, WO05078133, WO05112544, WO06090136, WO06096427, WO06097787, WO06101623, WO06128116, WO06128117, WO9721835, and WO27012119. Methods for altering meat quality and composition and associated markers in swine are described in detail in co-pending application US 60/839404, filed August 22, 2006 "Genetic Markers and Methods for Improving Swine Genetics" (Clutter et al.). Additional breeding resources including identified QTL and molecular markers are publicly available on the internet, such as for example www.ncbi.nlm.nih.gov and www.animalgenome.org, as well as the scientific literature.

**Meat Processing:**

There are numerous processes known in the art for processing animal flesh into meat products. These processes include cutting into large cuts of whole meat, such as for hams, steaks, and chops; mechanically shearing and mixing the meat such as for sausages, hamburger, and hot dogs; reforming smaller pieces into processed meats such as for bologna, salami, and the like; injecting water, bouillon, flavorings, or brine to enhance flavor and organoleptic properties; etc.

Examples of meat processing methods include the following US Patents and Applications: US3556809, US3916777, US4463027, US4584204, US4778682, US4867986, US4904496, US4980185, US5053237, US5082678, US5106639, US5116629, US5116633, US5211976, US5213829, US5250006, US5256433, US5380545, US5382444, US5415883, US5460842, US5468510, US5472725, US5474790, US5484625, US5489443, US5492711, US5514396, US5523102, US5556662, US5631035, US5674550, US5688549, US5698255, US5807598, US5895674, US5965191, US5989601, US6014926, US6054147, US6099891, US6103276, US6248381, US6613364, US6613369, US6716460, US6749884, US6763760, US6976421, US7022360, US7026007, US7169421, US2003049364, US2003198730, US2004001876, US2004047948, US2004166212, US2005142278, US20060068077, US20060088651, US2006068077, US2006286273, US2007004678, WO02065860, WO04082403, WO05034652, and WO05094617.

In a preferred embodiment of the invention, the stearidonic acid will be incorporated into the meat product in the form of a liquid vegetable oil, such as for example in a transgenic soybean oil. This fluid may be injected into the meat, mechanically mixed with the meat, or used to coat the exterior of the meat. In alternative embodiments of the invention, the oil may be first emulsified for form an emulsion. Preferably, the emulsion comprises an oil containing SDA and an aqueous liquid.

In some embodiments of the invention, the amount of fat in the starting meat is altered through sophisticated breeding methods such as marker assisted selection. However, some embodiments of the invention may also incorporate alternative means of reducing the fat content of meat such as pre-cooking some portion of the meat to reduce the fat content, incorporating meat from species known to have lower fat content, such as chicken breast meat for example, and any other extraction techniques such as are known in the art.

A variety of injection mechanisms are known in the art which may be suitable for application in embodiments of the present invention. For example, some devices utilize a plurality of needles inserted into the meat. As the needles are removed, a fluid is injected into the space formed by the injection needle. Alternative methods employ a plurality of nozzles with a high pressure fluid (e.g., injectate) which is forced into the meat using the pressure differential.

The injectate may be heated in a water bath at a temperature of from 43 to 71 °C (110 to 160° F) to keep the injectate within an acceptable temperature range. Meat can be placed at varying distances (from as close as 0.25 cm (0.1 inch) to as far as 25 cm (10 inches)) below the injector nozzles. Streams of liquid injectate may be emitted from the nozzles at high velocity, with bursts lasting 0.1 to 10 s, preferably 0.5 to 5 s. The liquid is pressurized to from 13.8 to 586 bar (200 pounds per square inch ("psi") to 8,500 psi) to obtain a high velocity injectate stream. The meat is preferably injected at multiple sites. The distance between injection sites was variable in order to achieve particular tenderization, moisture, and fat percentage characteristics.

The injectate may be comprised of various oils, water, and binders, is preferably maintained at below 49 °C (120° F) in order to avoid precooking of the meat and to minimize any degradation of oils (e.g., SDA) in the injectate. More preferably, the injectate is maintained at below 28 °C (100° F). In addition to incorporation of the fluid, mechanical tenderization may also result from the injection process.

In some embodiments of the invention, the spatial distribution of the SDA oil is predetermined. When preferably oriented, he energy of the injectate stream is dissipated along the path of the injectate. As a result, a portion of the injectate stream fans out to follow the meat grain along the path of the stream. Alternatively, injectate may be relatively uniformly distributed throughout the meat. Preferably, this procedure results in distribution of oils, water, and flavoring through the interior of the meat tissue.

A predetermined spatial orientation may provide an excellent technique for injecting oils, emulsions, or even an enzyme, such as collagenase, which is known to break down connected tissue. In some embodiments of the invention, injecting collagenase will tend to result in rapid and efficient tenderization since the injectate follows the tough connective tissue throughout the meat. The collagenase is, therefore, located directly adjacent to the tissue on which it acts.

In order to increase the juiciness and flavor of the injected meat, binders are added to the injectate stream. Such binders may include gel-forming materials and emulsifiers in the amount of from 0.1% to 2.5% of the total injectate. Binders may include gums, thickeners, salts, and combinations of the same.

Optional ingredients incorporated into or on the meat may further comprise a variety of additional compositions such as sodium chloride, potassium chloride, tocopherol, sugar, sodium tripolyphosphate, ascorbate, sodium nitrite, sodium nitrate, potassium lactate, sodium diacetate, acetic acid, sodium ascorbate, smoke flavoring agent, lecithin, water, methyl cellulose, bouillon, vinegar, colorants, vitamins, preservatives, pickling agents, spices, binders, and/or emulsifying agents.

Of particular importance, stabilizers and antioxidants may be used to maintain the flavor and organoleptic properties of both the meat and oil. For example, tocochromanols such as tocopherol can be incorporated into the oil and/or meat product. Additional stabilizers may include tertiary butyl hydroquinone (TBHQ), butylated hydroxyamisole, butylated hydroxytoluene, and citric acid.

For specific cuts of meat, the product may be sold without additives, or additives may be used to enhance the flavor, texture, and/or appearance of the product such as by injection of a brine solution or coating with a marinade. Methods of injecting solutions into meat include piercing the meat with needles and injecting a fluid under pressure into the interior of the meat (for example, US Patents 5,071,666, 5,142,971, 5,176,071, 6,165,528, and 6,497,176). In a preferred embodiment, a soybean oil comprising stearidonic acid is injected into the meat product. The SDA-containing oil may further comprise traditional brine additives. Furthermore, the SDA-containing oil may further comprise an emulsifier and be injected in the form of an emulsion.

For mechanically mixed products, a wide variety of meat sources and additives may be used in the same product. Meat from various parts of an animal may be combined including various meat sources such as meat trimmings, mechanically separated meat, meat obtained through recovery techniques, and/or meat analogs. Alternative sources of protein may be added such as meat from other animal species or even plant-based protein such as soy protein (see for example, US patent 6,797,288).

In some embodiments of the invention, extenders, fillers or binders may be used particularly for reformed meat products such as for example ground meats and/or reconstituted meats processed into cold-cuts. Such fillers may include soy flour, soy protein concentrate, isolated soy protein, wheat, rice, corn, barley, vegetable starch, vegetable flour, non-fat dry milk, skim milk, and dried milk. Extenders, fillers and binders typically comprise less than 4% of the total meat product.

In some embodiments of the present invention, mechanically mixed products may be formed into secondary shapes such as sausages, loafs, patties, links, cylinders, or other forms. This process may involve extrusion, injection into a casing, or molding under pressure.

In some embodiments of the present invention, the meat product may be heated and/or at least partially cooked prior to sale to the consumer. In some cases, the meat product may be heated and/or at least partially cooked prior to the addition of the SDA comprising composition, such as transgenic soy oil comprising SDA. In some embodiments, at least some portion of the meat product is substantially cooked prior to addition of SDA. Preferably, the complete SDA containing meat product is not exposed to high temperatures for long periods of time prior to delivery to the consumer. In some cases, high temperature may be acceptable for short periods of time.

In alternative embodiments of the invention, meat products according to compositions and/or methods described herein are incorporated into food products having substantial secondary components, such as for example, pizza, prepared dishes, frozen dinners, soups, sandwiches, hamburgers and ready to eat meals.

## ILLUSTRATIVE EMBODIMENTS OF THE INVENTION

The following examples are included to demonstrate general embodiments of the invention. It should be appreciated by those of skill in the art that the techniques disclosed in the examples which follow represent techniques discovered by the inventors to function well in the practice of the invention, and thus can be considered to constitute preferred modes for its practice.

The following examples may be applied to meat from sources including bovine, swine, poultry, and aquaculture using any modifications, substitutions, compositions, or apparatus known in the art.

### Example 1: Hamburger Comprising SDA oil

Commercial ground beef was purchased from a local supermarket. One half pound of beef was removed and placed in a mixing bowl. 2.34 g of SDA soy oil was mixed with the ground beef and was thoroughly mixed. The SDA soy oil contained approximately 20% SDA as a percentage of total fatty acids in the soy oil. Two quarter pound patties were made from the beef (approximately 135 g each).

The two patties were placed in a frying pan and the pan was placed on a household stove. The patties were fried until done. Each patty was rotated to avoid burning of the meat. The patties were removed from the heat when done (based on visual inspection) and cooled down using ambient air. The patties were packaged in a container for subsequent sensory and analytical testing. A control was produced in the same manner as above, but with commercial soy oil not containing SDA. Sensory evaluation of the control and SDA-containing hamburgers indicated no significant changes to texture or flavor.

**TABLE 4:** A partial fatty acid analysis of the cooked hamburger can be found in the table below.

|  | C14 | C16 | C18 | C18:1 | C18:2 | GLA | ALA | SDA |
|---|---|---|---|---|---|---|---|---|
| Hamburger - Control | 2.5% | 21.2% | 11.8% | 33.3% | 30.3% | 0.0% | 0.9% | 0.0% |

(continued)

|  | C14 | C16 | C18 | C18:1 | C18:2 | GLA | ALA | SDA |
|---|---|---|---|---|---|---|---|---|
| Hamburger - SDA | 2.9% | 25.0% | 14.3% | 39.5% | 14.7% | 0.6% | 1.2% | 1.9% |

**Example 2: Marinated Meat Products Incorporating SDA Oil**

A whole muscle or portion of a whole muscle of pork is coated in a liquid mixture at 10% of less of the precooked muscle weight. The marinade solution should be composed of the following ingredients listed as a percent by weight included in marinade solution: 66% SDA soy oil, 26% wine (white), 5% sage, and 3% black pepper. Lemon juice and minced garlic can be added to marinade solution by taste.

The marinade solution should be coated over the pre-cooked whole muscle cut and refrigerated for 8-12 h prior to cooking. This marinade solution could also be used by food processors prior to packaging.

**Example 3: Preparation of a Turkey meat product comprising an SDA emulsion.**

In the performance of the first embodiment, a portion of whole, single muscle meat derived from turkey is injected with an emulsion of transgenic SDA-containing soybean oil (15% SDA) and water, also containing salt, sugar and emulsifier, in an amount approximately 15% by weight of meat. The body was then tenderized, and subjected to a tumbling operation at 6 rpm for a period of 40 min at a pressure of $1.5 \times 10^4$ Pa. The portion is then placed in a tray, and conformed to a generally rectangular shape and frozen to a temperature of minus 18° C into a condition in which the portion is mechanically rigid. The block produced by freezing the portions may then be removed from the tray, and bagged and retained frozen until desired for further use.

The partially-formed portion thus provided is placed in a high pressure mould in which it is formed into a final desired shape, while retaining its low temperature, at a high pressure of between 23.5 and 690 bar (500 and 10,000 p.s.i.), preferably between 69 and 345 bar (1,000 and 5,000 p.s.i.), for a period of about 7.5 s. While the high pressure is applied to the portion, the meat product conforms to the shape of the mould without any significant disruption of the muscle tissue.

On conclusion of the pressing operation the block is removed from the high pressure mould, and is then subjected to a slicing operation, during which it is sliced to produce portions of meat having a relatively uniform cross section and having a thickness determined by the thickness of the cut.

The slicing operation may be carried out at a temperature raised somewhat about the - 18° C at which the moulding operation takes place, but preferably slicing is carried out without any significant elevation in temperature.

The slices may then be vacuum sealed in individual bags, and retained chilled or frozen until the product is cooked by the consumer.

Alternatively the meat may be cooked directly after being sliced, whilst in an individual pack, such as in a continuous oven or in a water bath, and frozen again or chilled, being reheated prior to being consumed.

Preferably, the meat may be cooked prior to the addition of the SDA to minimize any degradation of the added oil.

**Example 4: Turkey Meat with SDA Oil.**

Portions of whole muscle turkey meat are first injected with a marinade solution to approximately 12% of their original weight, with the brine composition comprising 78.5% water, 6% salt, 7% transgenic soy oil, 7% turkey flavor (salt, wheat starch, chicken fat, beef extract and alpha tocopherol), and 1.5% sodium caseinate, by weight. The SDA containing soy oil has an SDA concentration of about 28%. An injector equipped with bayonet-typed tenderizing needles are used to effect tenderizing of the meat.

The injected/tenderized portions are tumbled under a low pressure of $1.5 \times 10^4$ Pa or lower for 5 h at 6 rpm. The tumbled portions are separated and graded into various weight categories to accommodate various sizes of moulds.

The graded portions are fitted into the moulds in close proximity to fill the moulds, with care being taken to ensure alignment of the grain of the portions. A plurality of filled mould assemblies are placed into a plate-freezer 23, and subjected to a relatively low pressure of between 0.07 and 0.35 bar (1 and 5 p.s.i.) to conform the portions to the shape of the compartments without causing any significant disruption of the muscle tissue and are reduced in temperature by the plate-freezer to a temperature of about -18° C over a period of about 4 h.

The partially-formed portions of Example 2 are placed in a high pressure mould (FIG. 6) in which they are formed into a final desired shape, while being retained at its low temperature and at a pressure of $3.45 \times 10^6$ to $6.9 \times 10^7$ Pa (between 500 and 10,000 p.s.i.) preferably about 207 bar (3,000 p.s.i.), for a period of about 7.5 s.

During high pressure forming the liquid, particularly at the interface of the muscle tissue, unfreezes, allowing the muscle fibers to slip relative to one another as the portion is deformed into its a final, desired shape. However it is to be appreciated that desirably final shaping involves only a relatively small movement (e.g. less than 5 mm) from the initially formed shape, otherwise disruption to the muscle fibers may occur which will provide an impairment in the quality of the meat.

On conclusion of the pressing operation the block is removed from the high pressure mould, and is then subjected to a slicing operation, during which it is sliced to produce portions of meat having a relatively uniform cross section and having a thickness determined by the thickness of the cut.

The slicing operation may be carried out at a temperature raised somewhat about the-18° C. at which the molding operation takes place, but preferably slicing is carried out without any significant elevation in temperature.

The slices may then be vacuum sealed in individual bags, and retained chilled or frozen until the product is cooked by the consumer.

Alternatively the meat may be cooked directly after being sliced, whilst in an individual pack, such as in a continuous oven or in a water bath, and frozen again or chilled, being reheated prior to being consumed.

Preferably, the meat may be cooked prior to the addition of the SDA to minimize any degradation of the added oil.

### Example 5: Beef product comprising SDA Oil

Top loin and chuck portions of beef, all weighing between 1.13 and 1.22 kg (2.5 and 2.7 pounds), are tenderized and subsequently injected with a brine solution. The brine composition was 81.5 wt % water, 6% salt, 3% dextrose, 1.5% sodium caseinate, and 8% soy oil. The roasts are then tumbled for 40 min at 6 rpm under 880 mbar (26" Hg) vacuum. The portions are then placed in a mould and formed generally to the shape of the mould under a relatively low pressure of 0.35 bar (5 p.s.i.), and while in the mould are subjected to a temperature of -15° C. until they are rigid throughout. While rigidly frozen, the portions were transferred to a high pressure mould and pressed for seven seconds at 69 bar (1000 p.s.i.), the portions being conformed to the shape of the high pressure mould. The portions were then sliced into steaks to a thickness of 15 mm (0.69 inches).

### Exampled 6: Fresh Pork Sausage with SDA

A processed pork meat products of can be prepared having the following formulation: raw pork trimmings 93% (75% lean); Salt 1.5%; White pepper: 0.3%; Sage: 0.1%; Mace: 0.1%; Ginger: 0.02%; SDA containing soy oil 3%; High fructose corn syrup 1.5% (90 D.E.); wherein each percentage is on a weight basis. The soybean oil may also contain 100 ppm TBHQ; 1,000 ppm tocopherol, and 30 ppm citric acid. Preferably, the SDA containing soy oil has an SDA concentration of about 28%.

A small quantity of the above formulation is prepared by making a pre-blend of all dry ingredients and a second pre-blend of all wet ingredients. The dry pre-blend is admixed with the wet pre-blend in a mixer. The admixture is then added the oil based ingredients. Thereafter, the composition is further mixed at high shear to form a stable emulsion. The stable emulsion is then injected into sausage casings, packaged and stored.

Alternatively, a similar process can be used to make a pre-cooked product wherein the pork trimmings are cooked prior to combination with the SDA containing soy oil.

### Example 7: Polish Sausage with SDA

A skinless polish sausage is prepared according to the procedure of Example 1 having the following ingredients: Beef trimmings 45% (80% lean); Pork cheeks 20%; Regular pork trimmings: 25%; Salt: 2%; Ground black pepper: 0.15%; Marjoram: 0.05%; Sodium nitrite 0.02%; Garlic: 0.05%; SDA Soy Oil 6.5%; High fructose corn syrup 1.5%.

The soybean oil may also contain 100 ppm TBHQ; 1,000 ppm tocopherol, and 30 ppm citric acid. Preferably, the SDA containing soy oil has an SDA concentration of about 20%.

A small quantity of the above formulation is prepared by making a pre-blend of all dry ingredients and a second pre-blend of all wet ingredients. The dry pre-blend is admixed with the wet pre-blend in a mixer. To the admixture is added the oil based ingredients. Thereafter, the composition is further mixed at high shear form a stable emulsion. The stable emulsion is then injected into sausage casings, packaged and stored.

Alternatively, a similar process can be used to make a pre-cooked product wherein the pork trimmings are cooked prior to combination with the SDA containing soy oil.

### Example 8: Hard Salami containing SDA

The following ingredients can be used to make a hard salami product containing SDA. The ingredients include: beef chunks: 40%; pork jowls - 40%; Regular pork trimmings: 20%; salt: 3.2%; sucrose: 1.5; white pepper: 0.2%; sodium nitrate - 0.1%; garlic powder: 0.1%; SDA soy oil 3%; antioxidant blend: 0.01 %; high fructose corn syrup 1%. Preferably, the SDA containing soy oil has an SDA concentration of about 20%.

The antioxidant blend referred to above consists of 60% tocopherol available from Henkel Corporation under the trade name CoviOX T70, 30% TBHQ mixture of (32% glycerol monoleate, 30% corn oil, 20% TBHQ, 15% propylene glycol and 3% citric acid) available from Eastman Chemical Products Inc. under the trade name TENOX 20A, and 10% partially hydrogenated soybean oil with BHA to help protect flavor; available from Durkee Industrial Foods, under the trade name Durkex 100.

The sausages are prepared by first grinding the beef through a 3.2 mm (1/8-in.) plate and the pork through a 6.4 mm (1/4-in) plate. All the ingredients are then mixed in a mixer for 5 min or until a good distribution of the lean meat and fat is apparent.

The mix is then stored in trays 20 to 25 cm (8 to 10 inches) deep for 2 to 4 days at 4 to 7 °C (40 to 45° F) to age and to ferment the emulsion. The aged and fermented emulsion is next stuffed into No. $5 \times 22$ fibrous casings, sewed bungs, or suitably sized collagen casings. The stuffed product is dried for 9 to 11 days at 4 °C (40° F) and 60% relative humidity.

Holding times both during fermentation and drying can be greatly reduced if starter cultures are used.

## Example 9: Reduced Fat Hot Dogs Containing SDA

Hot dogs are made with reduced fat pork processed. A continuous run of ground pork was comminuted through a Cozzini grinder, the exit temperature being 18 °C (65° F). The resulting comminuted pork was passed through a swept surface heat exchanger, its temperature being raised to and maintained between 40 and 41 °C (104 and 106° F). At this temperature, the flow of pork was fed into a decanter centrifuge. The fat reduced meat was mixed in a paddle or ribbon mixer with sodium nitrite, sodium erythorbate, salt and sodium phosphate. One quarter of the water needed for the hot dog formulation is added to a running mixer, and mixing proceeds for 10 min at a temperature of -1 to +1 °C (30-35° F). Milk protein hydrolysate is added, followed by one-half of the remaining water needed for the formulation while mixing continued. SDA containing soybean oil (28% SDA) is then added at a rate of approximately 5% by weight. The remaining water was then added with rice gel, pre-gelled rice flour, corn syrup, dextrose, liquid smoke and liquid spice, and mixing continued for an additional 10 min at a temperature of 1-4 °C (35-40° F). The total mix time within the paddle or ribbon mixer is 25 min. This fat reduced pork product was then vacuum chopped to a temperature of 18-21 °C (65-70° F) and stuffed into cellulose casings. Each hot dog was heat processed to a temperature of 68-74 °C (155-165° F), followed by chilling to below 4 °C (40° F). The cellulose casings were peeled from the hot dogs and vacuum packaged.

## Example 10: Preparation of a Ham comprising SDA oil

First, a curing salt solution is prepared by adding 90% water to a mixing vessel. The water is cooled to -17 °C (2° F) and added in order are: 0.5% sodium tripolyphosphate, 5% Kilograms sodium chloride, 0.6% sodium nitrite, 5% Supro® Systems M112, 3% Proliant™ 8610, 1% SDA containing soy oil, 1% dextrose, 4% maltodextrin, 1% carrageenan 0.2% sodium erythorbate, and 3% potato starch. When hydration and solution are complete, a brine is formed having an SDA content. Hams are injected with this brine to give a meat product with improved fatty acid content.

## Example 11: Preparation of a Low-Saturated Fat Ham comprising SDA oil

Swine from the Large White breed are bred using marker assisted selection of the MC4R gene to decrease the amount of fat produced in the pigs. The total fat content in the hams is reduced by approximately 1%. After slaughter, these hams are injected with an injectate comprising 2% SDA oil, but otherwise as described in Example 10 above. The resulting hams have a lower saturated saturated fat content, higher beneficial fatty acid content, and equivalent total fat content in comparison with hams produced using the method of Example 10.

While the examples of embodiments of the invention have been described above primarily in relation to specific types of meat or meat products, it is of course to be appreciated that the invention has similar applicability to various other meats, such as chicken, turkey, fish, pork, lamb, beef, buffalo, shrimp, or meat products made there from.

REFERENCES

1. Casas E., et al., (2003), Detection of Quantitative Trait Loci for Growth and Carcass Composition in Cattle; J. ANIM. SCI. 81:2976-2983.

2. Droulez V., et al., (2006), Composition of Australian Red Meat 2002, FOOD AUSTRALIA, 58(7), 335-41.

3. de Koning, D. J. B., et a., (2001), Detection and Characterization of Quantitative Trait Loci for Meat Quality Traits in Pigs. J. ANIM. SCI. 79:2812-2819.

4. Fernando, R, and Grossman, M, (1989), Marker Assisted Selection Using Best Linear Unbiased Prediction, GENETICS SELECTION EVOLUTION 21:467-77.

5. Gilbey J., (2006), Identification of Genetic Markers Associated with Gyrodactylus Salaris Resistance in Atlantic Salmon Salmo Salar. DIS AQUAT ORGAN. 71(2):119-29.

6. Hayes BJ., et al., (2006) Power of QTL Mapping Experiments in Commercial Atlantic Salmon Populations, Exploiting Linkage and Linkage Disequilibrium and Effect of Limited Recombination in Males, HEREDITY. 97(1):19-26. [Epub 2006 May 10.]

7. Kim J.J. et al., (2003). Detection of Quantitative Trait Loci for Growth and Beef Carcass Fatness Traits in a Cross Between Bos Taurus (Angus) and Bos Indicus (Brahman) Cattle; J. ANIM. SCI. 81:1933-1942.

8. Kwok PY, (2001) Methods for Genotyping Single Nucleotide Polymorphisms, ANNU. REV. GENOMICS HUM. GENET., 2:235-258.

9. Leder EH., et al., (2006) The Candidate Gene, Clock, Localizes To A Strong Spawning Time Quantitative Trait Locus Region In Rainbow Trout, J HERED. 97(1):74-80. [Epub 2006 Jan 11].

10. Miller, Rhonda. (1998): Functionality of Non-Meat Ingredients Used in Enhanced Pork, The National Pork Board #04527 - 4/01.

11. Mizoshita K., et al., (2004), Quantitative Trait Loci Analysis for Growth and Carcass Traits in a Half-Sib Family of Purebred Japanese Black (Wagyu) Cattle; J. ANIM. SCI. 2004. 82:3415-3420.

12. Moghadam HK., et al., (2007), Quantitative Trait Loci for Body Weight, Condition Factor and Age at Sexual Maturation in Arctic Charr (Salvelinus Alpinus): Comparative Analysis with Rainbow Trout (Oncorhynchus Mykiss) and Atlantic Salmon (Salmo Salar). MOL GENET GENOMICS. 277(6):647-61. [Epub 2007 Feb 17.]

13. Nii M., et al., (2005) Quantitative Trait Loci Mapping for Meat Quality and Muscle Fiber Traits in a Japanese Wild Boar $\times$ Large White Intercross, J. ANIM. SCI. 83:308-15.

14. Quiniou SM., et al., (2007) A First Generation BAC-Based Physical Map of the Channel Catfish Genome. BMC GENOMICS. 8:40.

15. Reid DP., et al., (2005) QTL for Body Weight and Condition Factor in Atlantic Salmon (Salmo Salar): Comparative Analysis with Rainbow Trout (Oncorhynchus Mykiss) and Arctic Charr (Salvelinus Alpinus). HEREDITY. 94(2):166-72.

16. Rohrer, G. A., and J. W. Keele. (1998), Identification of QTL Affecting Carcass Composition in Swine: Fat Deposition Traits. J. ANIM. SCI. 76:2247-2254.

17. Rothschild, M. F. and G. S. Plastow (1999), Advances in Pig Genomics and Industry Applications, AGBIOTECHNET 10:1-8.

18. Rule, DC et al (2002) Comparison of Muscle Fatty Acid Profiles and Cholesterol Concentrations of Bison, Beef Cattle, Elk and Chicken. J ANIM SCI. 80:1202-1211.

19. Sonesson AK. (2007) Within-Family Marker-Assisted Selection For Aquaculture Species. GENET SEL EVOL. 39(3):301-17. [Epub 2007 Apr 14.]

20. USDA Composition of Foods - Raw, Processed, Prepared. USDA HUMAN NUTRITION INFORMATION SERVICE, in the Agriculture Handbook 8 Series (8-5, 1979; 8-10, 1992; 8-13, 1990; 8-17, (1989))

**Claims**

1. A meat product comprising endogenous oil from a transgenic soybean, wherein the meat product comprises arachidonic acid (AA), alpha-linolenic acid (ALA), and stearidonic acid (SDA), wherein the ratio of concentrations of SDA/AA is at least 0.1, the ratio of concentrations of SDA/ALA is at least 1.0, and said meat product comprises at least 0.1 grams of SDA per 100 grams of meat product.

2. The meat product of claim 1 wherein said ratio of concentrations of SDA/AA is at least 0.3.

3. The meat product of claim 1 wherein said ratio of concentrations of SDA/AA is at least 1.0.

4. The meat product of claim 3, further comprising gamma-linolenic acid (GLA).

5. The meat product of claim 4 wherein said meat product comprises a ratio of compositions of SDA/GLA of at least 2.0.

6. The meat product of claim 5 wherein said meat product comprises a ratio of compositions of SDA/GLA of at least 2.5.

7. The meat product of claim 1 further comprising 6-cis, 9-cis, 12-cis, 15-trans-octadecatetraenoic acid.

8. The meat product of claim 1 further comprising 9-cis, 12-cis, 15-trans-alpha-linolenic acid.

9. The meat product of claim 1 further comprising 6,9-octadecadienoic acid.

10. The meat product of claim 1 further comprising tocopherols.


**Patentansprüche**

1. Fleischprodukt, das endogenes Öl aus einer transgenen Sojabohne umfasst, wobei das Fleischprodukt Arachidonsäure (AA), alpha-Linolensäure (ALA) und Stearidonsäure (SDA) umfasst, wobei das Verhältnis der Konzentrationen von SDA/AA wenigstens 0,1 beträgt, das Verhältnis der Konzentrationen von SDA/ALA wenigstens 1,0 beträgt und das Fleischprodukt wenigstens 0,1 Gramm SDA pro 100 g Fleischprodukt umfasst.

2. Fleischprodukt gemäß Anspruch 1, wobei das Verhältnis der Konzentrationen von SDA/AA wenigstens 0,3 beträgt.

3. Fleischprodukt gemäß Anspruch 1, wobei das Verhältnis der Konzentrationen von SDA/AA wenigstens 1,0 beträgt.

4. Fleischprodukt gemäß Anspruch 3, das weiterhin gamma-Linolensäure (GLA) umfasst.

5. Fleischprodukt gemäß Anspruch 4, wobei das Fleischprodukt ein Verhältnis der Zusammensetzungen von SDA/GLA von wenigstens 2,0 umfasst.

6. Fleischprodukt gemäß Anspruch 5, wobei das Fleischprodukt ein Verhältnis der Zusammensetzungen von SDA/GLA von wenigstens 2,5 umfasst.

7. Fleischprodukt gemäß Anspruch 1, das weiterhin 6-cis,9-cis,12-cis,15-trans-Octadecatetraensäure umfasst.

8. Fleischprodukt gemäß Anspruch 1, das weiterhin 9-cis,12-cis,15-trans-alpha-Linolensäure umfasst.

9. Fleischprodukt gemäß Anspruch 1, das weiterhin 6,9-Octadecadiensäure umfasst.

10. Fleischprodukt gemäß Anspruch 1, das weiterhin Tocopherole umfasst.


**Revendications**

1. Produit carné comprenant une huile endogène issue d'un soja transgénique, dans lequel le produit carné comprend de l'acide arachidonique (AA), de l'acide alpha-linolénique (ALA) et de l'acide stéaridonique (SDA), dans lequel le rapport des concentrations de SDA/AA est d'au moins 0,1, le rapport des concentrations de SDA/ALA est d'au moins 1,0, et ledit produit carné comprend au moins 0,1 gramme de SDA pour 100 grammes de produit carné.

2. Produit carné selon la revendication 1, dans lequel ledit rapport des concentrations de SDA/AA est d'au moins 0,3.

3. Produit carné selon la revendication 1, dans lequel ledit rapport des concentrations de SDA/AA est d'au moins 1,0.

4. Produit carné selon la revendication 3, comprenant en outre de l'acide gamma-linolénique (GLA).

5. Produit carné selon la revendication 4, dans lequel ledit produit carné comprend un rapport des compositions de SDA/GLA d'au moins 2,0.

6. Produit carné selon la revendication 5, dans lequel ledit produit carné comprend un rapport des compositions de SDA/GLA d'au moins 2,5.

7. Produit carné selon la revendication 1, comprenant en outre de l'acide 6-cis, 9-cis, 12-cis, 15-trans-octadécatétraénoïque.

8. Produit carné selon la revendication 1, comprenant en outre de l'acide 9-cis, 12-cis, 15-trans-alpha-linolénique.

9. Produit carné selon la revendication 1, comprenant en outre de l'acide 6,9-octadécadiénoïque.

10. Produit carné selon la revendication 1, comprenant en outre des tocophérols.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5116629 A
- WO 06031132 A
- US 200704678 A1
- US 2004001876 A
- US 6716460 B
- US 6955830 B
- US 6869631 B
- US 6763760 B
- US 6632463 B
- US 6405646 B
- US 6386099 B
- US 6319527 B
- US 6165528 A
- US 5071666 A
- US 5881640 A
- US 5307737 A
- US 5053237 A
- US 3556809 A
- US 5460842 A
- US 6099891 A
- US 5468510 A
- US 5382444 A
- US 5688549 A
- WO 05034652 A1
- WO 05094617 A1
- US 5116633 A
- WO 2005021761 A
- US 6803190 B
- US 20040261138 A
- US 20060288433 A
- US 20040018511 A
- US 6569629 B
- US 6919177 B
- US 6458531 B
- US 6492142 B
- US 7074562 B
- US 20030186299 A
- US 20060111578 A
- US 20060110521 A
- US 20060111254 A
- US 5944652 A
- US 6696253 B
- US 6716972 B
- US 7244564 B
- US 2002051989 A
- US 2003017470 A
- US 2003129610 A
- US 2003186299 A
- US 2004018511 A
- US 2004029145 A
- US 2004048267 A
- US 2004055029 A
- US 2004235030 A
- US 2004259127 A
- US 2004261138 A
- US 2005202484 A
- US 2005208551 A
- US 2005214814 A
- US 2006037090 A
- US 2006211006 A
- US 2006223058 A
- US 2006275793 A
- US 2006288433 A
- US 2007003956 A
- US 2007006333 A
- US 2007092909 A
- WO 0006777 A
- WO 0034476 A
- WO 0036143 A
- WO 0146406 A
- WO 0175161 A
- WO 0220850 A
- WO 03060151 A
- WO 03071865 A
- WO 03076573 A
- WO 03078651 A
- WO 03104492 A
- WO 04063386 A
- WO 04081194 A
- WO 05001032 A
- WO 05015989 A
- WO 05017204 A
- WO 05078133 A
- WO 05112544 A
- WO 06090136 A
- WO 06096427 A
- WO 06097787 A
- WO 06101623 A
- WO 06128116 A
- WO 06128117 A
- WO 9721835 A
- WO 27012119 A
- US 60839404 B
- US 3916777 A
- US 4463027 A
- US 4584204 A
- US 4778682 A
- US 4867986 A

- US 4904496 A
- US 4980185 A
- US 5082678 A
- US 5106639 A
- US 5211976 A
- US 5213829 A
- US 5250006 A
- US 5256433 A
- US 5380545 A
- US 5415883 A
- US 5472725 A
- US 5474790 A
- US 5484625 A
- US 5489443 A
- US 5492711 A
- US 5514396 A
- US 5523102 A
- US 5556662 A
- US 5631035 A
- US 5674550 A
- US 5698255 A
- US 5807598 A
- US 5895674 A
- US 5965191 A
- US 5989601 A
- US 6014926 A
- US 6054147 A

- US 6103276 A
- US 6248381 B
- US 6613364 B
- US 6613369 B
- US 6749884 B
- US 6976421 B
- US 7022360 B
- US 7026007 B
- US 7169421 B
- US 2003049364 A
- US 2003198730 A
- US 2004047948 A
- US 2004166212 A
- US 2005142278 A
- US 20060068077 A
- US 20060088651 A
- US 2006068077 A
- US 2006286273 A
- US 2007004678 A
- WO 02065860 A
- WO 04082403 A
- WO 05034652 A
- WO 05094617 A
- US 5142971 A
- US 5176071 A
- US 6497176 B
- US 6797288 B

**Non-patent literature cited in the description**

- **D.C. RULE et al.** *J. Animal Sci.,* 2002, vol. 80 (5), 1202-1211
- **RULE et al.** Comparison of muscle fatty acid profiles and cholesterol concentrations of bison, beef cattle, elk and chicken. *J Anim Sci.,* 2002, vol. 80, 1202-1211
- **FOLCH, J. ; M. LEES ; G. H. SLOAN-STANLEY.** A simple method for the isolation and purification of total lipids from animal tissues. *J. BIOL. CHEM.,* 1957, vol. 226, 497-509
- **CASAS E. et al.** Detection of Quantitative Trait Loci for Growth and Carcass Composition in Cattle. *J. ANIM. SCI.,* 2003, vol. 81, 2976-2983
- **DROULEZ V. et al.** Composition of Australian Red Meat 2002. *FOOD AUSTRALIA,* 2006, vol. 58 (7), 335-41
- **DE KONING, D. J. B.** Detection and Characterization of Quantitative Trait Loci for Meat Quality Traits in Pigs. *J. ANIM. SCI.,* 2001, vol. 79, 2812-2819
- **FERNANDO, R ; GROSSMAN, M.** Marker Assisted Selection Using Best Linear Unbiased Prediction. *GENETICS SELECTION EVOLUTION,* 1989, vol. 21, 467-77
- **GILBEY J.** Identification of Genetic Markers Associated with Gyrodactylus Salaris Resistance in Atlantic Salmon Salmo Salar. *DIS AQUAT ORGAN.,* 2006, vol. 71 (2), 119-29

- **HAYES BJ. et al.** Power of QTL Mapping Experiments in Commercial Atlantic Salmon Populations, Exploiting Linkage and Linkage Disequilibrium and Effect of Limited Recombination in Males. *HEREDITY,* 2006, vol. 97 (1), 19-26
- **KIM J.J. et al.** Detection of Quantitative Trait Loci for Growth and Beef Carcass Fatness Traits in a Cross Between Bos Taurus (Angus) and Bos Indicus (Brahman) Cattle. *J. ANIM. SCI.,* 2003, vol. 81, 1933-1942
- **KWOK PY.** Methods for Genotyping Single Nucleotide Polymorphisms. *ANNU. REV. GENOMICS HUM. GENET.,* 2001, vol. 2, 235-258
- **LEDER EH. et al.** The Candidate Gene, Clock, Localizes To A Strong Spawning Time Quantitative Trait Locus Region In Rainbow Trout. *J HERED,* 2006, vol. 97 (1), 74-80
- **MILLER ; RHONDA.** Functionality of Non-Meat Ingredients Used in Enhanced Pork. *The National Pork Board,* 1998
- **MIZOSHITA K. et al.** Quantitative Trait Loci Analysis for Growth and Carcass Traits in a Half-Sib Family of Purebred Japanese Black (Wagyu) Cattle. *J. ANIM. SCI. 2004,* 2004, vol. 82, 3415-3420

- **MOGHADAM HK. et al.** Quantitative Trait Loci for Body Weight, Condition Factor and Age at Sexual Maturation in Arctic Charr (Salvelinus Alpinus): Comparative Analysis with Rainbow Trout (Oncorhynchus Mykiss) and Atlantic Salmon (Salmo Salar). *MOL GENET GENOMICS,* 2007, vol. 277 (6), 647-61
- **NII M. et al.** Quantitative Trait Loci Mapping for Meat Quality and Muscle Fiber Traits in a Japanese Wild Boar × Large White Intercross. *J. ANIM. SCI.,* 2005, vol. 83, 308-15
- **QUINIOU SM. et al.** A First Generation BAC-Based Physical Map of the Channel Catfish Genome. *BMC GENOMICS,* 2007, vol. 8, 40
- **REID DP. et al.** QTL for Body Weight and Condition Factor in Atlantic Salmon (Salmo Salar): Comparative Analysis with Rainbow Trout (Oncorhynchus Mykiss) and Arctic Charr (Salvelinus Alpinus). *HEREDITY,* 2005, vol. 94 (2), 166-72
- **ROHRER, G. A. ; J. W. KEELE.** Identification of QTL Affecting Carcass Composition in Swine: Fat Deposition Traits. *J. ANIM. SCI.,* 1998, vol. 76, 2247-2254
- **ROTHSCHILD, M. F. ; G. S. PLASTOW.** Advances in Pig Genomics and Industry Applications. *AGBIOTECHNET,* 1999, vol. 10, 1-8
- **RULE, DC et al.** Comparison of Muscle Fatty Acid Profiles and Cholesterol Concentrations of Bison, Beef Cattle, Elk and Chicken. *J ANIM SCI.,* 2002, vol. 80, 1202-1211
- **SONESSON AK.** Within-Family Marker-Assisted Selection For Aquaculture Species. *GENET SEL EVOL.,* 2007, vol. 39 (3), 301-17
- USDA Composition of Foods - Raw, Processed, Prepared. USDA HUMAN NUTRITION INFORMATION SERVICE. Agriculture Handbook 8 Series. 1979, vol. 8-5
- USDA COMPOSITION OF FOODS - RAW, PROCESSED, PREPARED. USDA HUMAN NUTRITION INFORMATION SERVICE. AGRICULTURE HANDBOOK 8 SERIES. 1992, vol. 8-10
- USDA COMPOSITION OF FOODS - RAW, PROCESSED, PREPARED. USDA HUMAN NUTRITION INFORMATION SERVICE. AGRICULTURE HANDBOOK 8 SERIES. 1990, vol. 8-13
- USDA COMPOSITION OF FOODS - RAW, PROCESSED, PREPARED. USDA HUMAN NUTRITION INFORMATION SERVICE. AGRICULTURE HANDBOOK 8 SERIES. 1989, vol. 8-17